(19)

Europäisches
Patentamt
European
Patent Office
Office européen
des brevets

(11) **EP 1 956 364 B1**

(12) **EUROPEAN PATENT SPECIFICATION**

(45) Date of publication and mention
of the grant of the patent:
**02.01.2013 Bulletin 2013/01**

(51) Int Cl.:
***G01N 21/55*** *(2006.01)*

(21) Application number: **08100551.4**

(22) Date of filing: **16.01.2008**

(54) **Self-referenced integrated biosensor based on surface plasmon resonance mediated luminescence**

Selbstbezüglicher integrierter Biosensor auf der Basis von oberflächenplasmonenresonanzvermittelter Lumineszenz

Biocapteur intégré auto-référencé basé sur une luminescence à médiation à résonance plasmonique de surface

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **18.01.2007 US 880944 P**

(43) Date of publication of application:
**13.08.2008 Bulletin 2008/33**

(73) Proprietor: **Société de Commercialisation des Produits de la
Recherche Appliquée - Socpra Sciences et Génie S.E.C.
Sherbrooke, QC J1K 2R1 (CA)**

(72) Inventors:
• **Dubowski, Jan J.
Sherbrooke Québec J1K 3C6 (CA)**
• **Lepage, Dominic
Saint-Denis-de-Brompton Québec J0B 2P0 (CA)**

(74) Representative: **Schmit, Christian Norbert Marie
SCHMIT CHRETIEN
111, cours du Médoc
33300 Bordeaux (FR)**

(56) References cited:
**US-A1- 2007 229 836    US-B1- 6 534 798**

• **PILLAI S ET AL: "Enhanced emission from Si-based light-emitting diodes using surface plasmons" APPLIED PHYSICS LETTERS, AIP, AMERICAN INSTITUTE OF PHYSICS, MELVILLE, NY, US, vol. 88, no. 16, 17 April 2006 (2006-04-17), pages 161102-161102, XP012081144 ISSN: 0003-6951**
• **LEPAGE D AND DUBOWSKI J J: "Surface plasmon assisted photoluminescence in GaAs-AlGaAs quantum well microstructures" APPLIED PHYSICS LETTERS, vol. 91, 16 October 2007 (2007-10-16), pages 163106-1-163106-3, XP002477909**

**Description**

FIELD

The present invention relates to a sensing device. More specifically, the present invention is concerned with a sensing device in which surface plasmons are generated by a luminescence signal.

BACKGROUND

Luminescence is a general term describing any process in which a material emits light of a different energy than it absorbs it. Examples of luminescence include photoluminescence, electroluminescence, and chemoluminescence. In the case of a semiconductor material, the semiconductor material produces electroluminescence when an electric current or a sufficiently strong electric field passes therethrough. Photoluminescence is a process in which a material, for example a semiconductor, absorbs an incoming photon, then transitions to a higher electronic energy state, and finally radiates an outgoing photon and returns to a lower energy state. Photoluminescence can be used as a non destructive characterization tool since it does not require physical contact with the sample.

In electrodynamics, polarization is the property of electromagnetic waves, such as light or surface plasmons, that describes the direction of their transverse electric field. An electromagnetic wave can be decomposed in a linear combination comprising an S-polarization and a P-polarization, where the S-polarization describes an electric field component perpendicular to a plane of incidence, whereas the P-polarization describes an electric field component parallel to the plane of incidence.

A plasmon is a quasiparticle resulting from the quantization of plasma oscillations produced by periodic oscillations of charge density. A plasmon is a hybrid of electron plasma in a metal or a semiconductor, and a photon. Thus, surface plasmons are oscillations that may have frequencies in an optical range.

Surface plasmons are plasmons confined to surfaces and strongly interacting with light, resulting in polaritons, i.e. quasiparticles generated by strong coupling of electromagnetic waves with an electric or magnetic dipole-carrying excitation and which comprise a quantized charge and quantized oscillations. They occur at the interface of a first material having a positive dielectric constant with a second material having a negative dielectric constant, typically a metal or a doped dielectric. Polaritons can describe the crossing of the dispersion of light with any interacting resonance. Accordingly, surface plasmons resulting in polaritons are called surface plasmons-polaritons. The latter are transverse magnetic modes, since surface charges generation requires an electric field normal to the surface. Thus, the interaction of surface plasmons-polaritons with light will appear P-polarized in nature.

The theory of surface plasmons-polaritons predicts an effect of loss of luminescence signal when a metal is deposited on a photo-emitting semiconductor substrate. For this to occur, the surface plasmon energy of the metal layer has to be in near resonance with the energy of excitons in the semiconductor. The evidence of this phenomenon was first reported by light emitting diode experiments (Barnes 2004; Hecker et al. 1999; Neogi et al. 2002; Okamoto et al. 2004; Vuckovic et al. 2000). The effect of loss of photoluminescence signal is present with a gallium arsenide (GaAs) substrate coated with gold (Au) (Hecker et al. 1998; Hecker et al. 1999), denoted by GaAs-Au, since in that case a GaAs substrate photoluminescence emission energy falls within the tail energy of the GaAs-Au surface plasmons. Also, many experiments (Barnes 2004; Gontijo et al. 1999; Hecker et al. 1998; Hecker et al. 1999; Neogi et al. 2002; Neogi and Morkoc 2004; Okamoto et al. 2004) confirm that an electron-beam evaporated metal film on a semiconductor surface will absorb the photoluminescence signal through surface plasmons whenever resonance conditions are satisfied.

N.E. Hecker et al. (1998, 1999) reported a surface plasmon photoluminescence enhancement for a 55 nm deep AlGaAs-GaAs quantum wells grated microstructure coated with an Au film and claimed to have detected surface plasmon resonance by observing photoluminescence enhancement at an angle of 21° from the surface normal of the microstructure. However, an analysis of this result shows that surface plasmons of energy corresponding to their quantum wells have a very large projected wavevector. This corresponds to a surface plasmon penetration depth that is smaller than the distance from the gold film to the quantum well. Also, the propagation length of surface plasmons corresponding to the quantum well energy is several times below the grating periodicity so that these surface plasmons cannot couple to surface corrugation nor be extracted through such means. Observed spontaneous emission enhancement from quantum wells under a grating region is due to an enhanced absorption of a 754 nm laser excitation source, as demonstrated by Stuart and Hall case (Stuart and Hall 1996). Photoluminescence enhancement then effectively corresponds to assisted surface plasmons, but this is the interaction between the grating structure and the excitation laser that produces extra emission, as shown by Ebbesen et al. and Porto et al. (Ebbesen et al. 1998; Porto et al. 1999).

Okamoto et al. (Okamoto et al. 2004) have demonstrated enhancement of surface plasmons at a silver-InGaN interface by evaporating a silver layer 40 nm thick on top of an InGaN quantum well with GaN spacers varying from 10 nm to 150 nm. The quantum wells lie on a sapphire substrate and the excitation is made from the surface opposite to the silver of the silver-InGaN interface, more specifically through the sapphire substrate using a 405 nm laser. Okamoto et al, thus showed that the coupling between the InGaN quantum wells and the surface plasmons of corresponding energy induces an enhancement of the internal quantum efficiency. Okamoto et al. also claimed that the surface roughness, which is typically 20 nm, of the silver layer allows extracting light from a surface plasmon mode induced by exciton coupling. Nevertheless, this is possible only when a thick metal film is deposited on the GaN spacer. Such a thick film completely prohibits the coupling between surface plasmons of an air-silver interface and a silver-GaN interface. The resulting small projected wavevector, combined with the long propagation length of these surface plasmons at the silver-GaN interface, allows for interactions between the quantum well and the related surface plasmons of the interface. Since the surface plasmon propagating length can extend several micrometers, the 20 nm corrugation could extract the surface plasmon mode. This setup can be very useful for horizontal LED applications, but raises problems in the case of biosensing. The key limitation thereof lies in the excitation made from behind, which requires specially designed quantum well microstructures deposited on transparent substrates. Also, the large metal thickness (> 30 nm) prevents surface plasmons on the top surface, i.e. the interface with air, from efficiently interacting with a quantum well photoluminescence signal. Clearly, biomolecules deposited on such a surface cannot couple with the quantum wells below as the metal film is too thick.

Gontijo et al. (Gontijo et al. 1999) have made a similar experiment, but with a layer of silver 8 nm thick. Even though in the latter case the quantum wells were very close to the surface, poor roughness of the used film of silver was insufficient to induce extraction of surface plasmons.

More recently, Takeda et al. (Takeda et al. 2006) obtained an enhanced photoluminescence signal from Si nanocrystals embedded in a $SiO_2$ substrate. The nanocrystals were coated with Au films 50 or 100 nm thick and capped with photoresist-made grating (~0.7 $\mu$m period). The so formed microstructure was excited through a fused quartz substrate. Potentially, this approach could be used for constructing a surface sensitive optical device. However, biosensing applications thereof are questionable due to the uncertain chemistry of binding of specific biomolecules to known photoresists. Also, due to a weak photoluminescence signal from Si nanocrystals, relatively high-power excitation sources have to be applied to the microstructure, which would result in excessive heating of samples and increased risk of denaturing biomolecules attached to their surface. The approach would require tedious measuring schemes nevertheless resulting in a low degree of detection sensitivity.

## SUMMARY

According to the present invention, there is provided a sensing device for characterizing a substance by modifying modes of resonance of surface plasmons as defined in claim 1.

In accordance with the present invention, there is also provided a sensing method for characterizing a substance by modifying modes of resonance of surface plasmons as defined in claim 12.

The present description refers to other documents listed at the end of the present disclosure.

The use of the word "a" or "an" when used in conjunction with the term "comprising" in the claims and/or the specification may mean "one", but it is also consistent with the meaning of "one or more", "at least one", and "one or more than one". Similarly, the word "another" may mean at least a second or more.

As used in this specification and claim(s), the words "comprising" (and any form of comprising, such as "comprise" and "comprises"), "having" (and any form of having, such as "have" and "has"), "including" (and any form of including, such as "include" and "includes") or "containing" (and any form of containing, such as "contain" and "contains"), are inclusive or openended and do not exclude additional, unrecited elements or process steps.

The foregoing and other objects, advantages and features of the present invention will become more apparent upon reading of the following non-restrictive description of an illustrative embodiment thereof, given by way of example only, with reference to the accompanying drawings.

## BRIEF DESCRIPTION OF THE DRAWINGS

In the appended drawings:

Figure 1 is schematic cross-sectional view of a sensing device according to an illustrative embodiment of the present invention;

Figure 2 is a map showing the quantum well photoluminescence intensity signal of the sensing device of Figure 1 at a wavelength of 820 nm;

Figure 3a is a graph of a normalized quantum well photoluminescence intensity in a grating region as a function of a grating vector for gratings with groove height of 5 nm, for both S- and P-polarization of light; and

Figure 3b is a graph of a normalized quantum well photoluminescence intensity in the grating region as a function of the grating vector for gratings with groove height of 20 nm, for both S- and P-polarization of light.

### DETAILED DESCRIPTION

Generally stated, the non-restrictive illustrative embodiment of the present invention described hereinbelow is concerned with a sensing device and method for characterizing a substance, using luminescence for modifying modes of resonance of surface plasmons.

In the following description, a sensing device 2 according to the non-restrictive illustrative embodiment and a corresponding method based on surface plasmon resonance will be described with reference to the appended Figures.

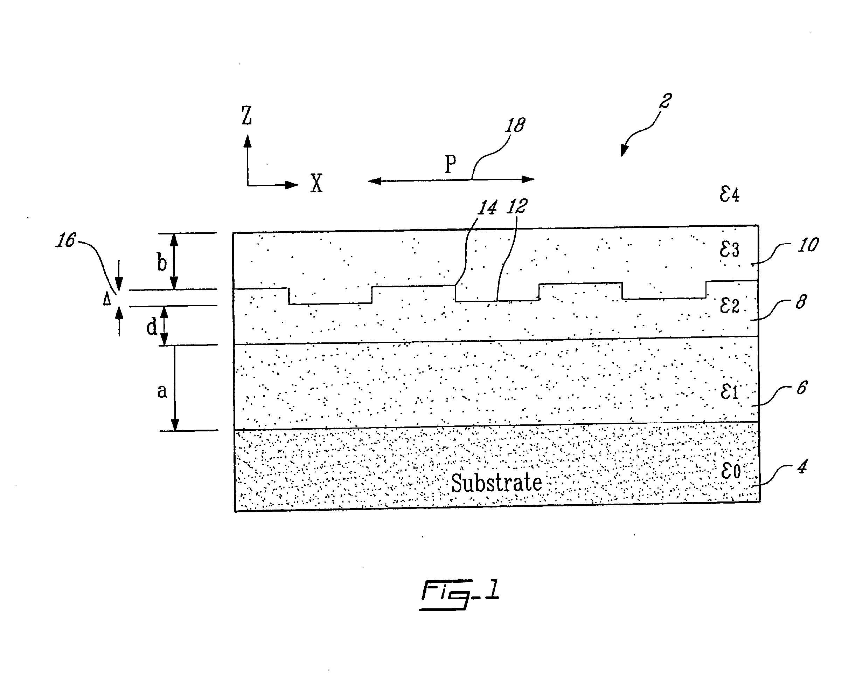

Figure 1 shows a schematic cross-sectional view of the sensing device 2 comprising three (3) layers consecutively applied upon each other in the following order: a photo-emitting substrate layer 4, a dielectric adaptive layer 6 and a sensing layer 8.

As also illustrated in Figure 1 as a non-limitative example, a polymethylmethacrylate (PMMA) spin-coated layer 10 is applied upon a sensing outer surface 12 of the sensing layer 8 of the sensing device 2 to simulate a dielectric constant of a bio-substance. This layer 10 is therefore not present in an operational sensing device 2.

As a non-limitative example, the following Table 1 characterizes the four layers 4, 6, 8 and 10 forming the sensing device 2 according to their respective thicknesses, refractive indices and materials of which they are made. The symbol $\bar{h}$ represents the Planck constant over $2\pi$, c is the speed of light, E is the energy of the luminescence signal and $n''_8$ is the complex part of the refractive index of the sensing layer 8.

Table 1

| Item | Characteristics to be used | Dielectric index | Material |
|---|---|---|---|
| PMMA spin-coated layer 10 | Thickness $\geq$ surface plasmon penetration depth (~20-70 nm). | $\geq 0$ | PMMA$_{950}$ |
| Grating pattern 14 | Linear grating pattern with a period 18 of $\dfrac{\hbar \cdot c}{E \cdot n''_8}$. | $\leq 0$ | Gold |
| Sensing layer 8 | Chosen according to luminescence source and energy of the pertaining signal, and the surface plasmons penetration depth (10-30 nm). | $\leq 0$ | Gold |
| Dielectric adaptive layer 6 | Chosen according to energies that are filtered in the Fabry-Perot etalon. A dielectric constant close to that of PMMA spin-coated layer 10 facilitates surface plasmons coupling. | $\geq 0$ | SiO$_2$ |
| Photo-emitting substrate layer 4 | Energy of the luminescence signal. | $\geq 0$ | GaAs-AlGaAs heterostructure |

The photo-emitting substrate layer 4 is used to generate a luminescence signal which, in turn, generates surface plasmon modes of resonance at the interface between the sensing layer 8 and the PMMA spin-coated layer 10.

The photo-emitting substrate layer 4 can be made, for example, of a GaAs-AlGaAs heterostructure as indicated in the above Table 1. Any other photo-emitting materials, or structures, could be used for the substrate layer 4 including, but not limited to, materials such as aluminium gallium indium phosphide (AlGaInP), gallium nitride (GaN), silicon carbide (SiC), sapphire (Al$_2$O$_3$) or zinc selenide (ZnSe). Organic light emitting substances and laser diodes, including VCSELs could also be utilized. The important characteristic of this layer is that it emits light. The rest of the architecture, namely the periodicity 18 of the grating and the sensing material of layer 8, are to be adapted to the emitted wavelengths of this photo-emitting substrate layer 4.

For example, an external laser can be used to excite the photo-emitting substrate layer 4 and thereby generate the photoluminescence signal from the photo-emitting substrate layer 4.

Alternatively, it is possible to produce a probe signal, for example an electroluminescence signal, directly within the photo-emitting substrate layer 4 through electrical biasing of this photo-emitting substrate layer 4, exactly as in any commercial light emitting diode. This approach allows substantial miniaturizing and simplifying of the structure of the sensing device 2 by avoiding optical alignment procedures.

The dielectric adaptive layer 6 can be made, for example, of material such as $SiO_2$ as indicated in Table 1. Any material with a dielectric index $\geq 0$ (and ideally with a complex dielectric index = 0) could be used for that purpose. As non-limitative examples, semi-transparent materials such as silicon nitride (SiN) or polymers composites, like PMMA, could adequately be utilised. The nature of the adaptive layer dielectric index will influence the surface plasmon resonance modes. The deposited thickness is to be adjusted when using the dielectric adaptive layer 6 as a Fabry-Perot etalon.

This dielectric adaptive layer 6 is used to facilitate and/or to increase the propagation length of the surface plasmons at the sensing outer surface 12 of the sensing layer 8. This comes from the real dielectric constant of the adaptive layer 6 being $\geq 0$ but its complex value ~0 at the plasmons' frequencies, yielding a lower surface plasmon plane wavevector. The surface plasmon exited modes are lower, resulting at the interface in long propagation lengths and reduced dissipations.

According to the invention the dielectric adaptive layer 6 is configured so as to define a Fabry-Perot etalon. A Fabry-Pérot etalon is typically made of a transparent plate with two reflecting surfaces. This optical setup is broadly used to filter specific wavelengths in resonance with the etalon's predefined geometry and dielectric properties. In the non-restrictive illustrative embodiment of Figure 1, the dielectric adaptive layer 6 forms an etalon with the photo-emitting substrate layer 4 and the sensing layer 8. In such embodiment, the Fabry-Pérot etalon can be used to maximise the signal to noise ratio of the light signal emitted by the biosensor. The Fabry-Perot effect could also enhance the surface plasmon generation by multiplying the interactions between the emitted photons and the grated surface.

The sensing layer 8 is typically made of a metal, for example gold. Any interface between two, or three materials able to support surface plasmons will only do so for specific frequencies. The supported frequencies are modulated by the nature of the materials and the geometries involved. In the above example of Table 1, the sensing layer 8 is made of gold and supports surface plasmons of 1.51 eV, an energy corresponding to the light emission of the photo-emitting substrate layer 4. Other metals, such as silver or aluminum, are to be used in combination with other photo-emitting substrates. There are various considerations for the choice of sensing material:

- The sensing material (material of the sensing layer 8), including gold, should be adequate to support the plasmon modes of energy corresponding to the energy emitted by the photo-emitting substrate layer 4;

- The sensing material, including gold, should be adequate to provide a substantially strong coupling with biological substances, for example self-assembled monolayers of thiols constituting a protein-based architecture for biosensing; and

- The characteristics and optical properties of the sensing material, including gold, should be well known and easily be engineered.

The sensing outer surface 12 is positioned opposite to the dielectric adaptive layer 6 and is geometrically functionalized, for example with a linear grating pattern 14, to induce surface plasmons resonance in response to the luminescence signal from the photo-emitting substrate layer 4 and to extract the surface bounded modes of resonance of the surface plasmons at the interface between the sensing layer 8 and, for example, the PMMA spin-coated layer 10 or other substance to characterize.

In the illustrated example, the linear pattern 14 is a rectangular grating pattern chosen for its simplicity. The period of the grating pattern 14 and the height of this pattern 14 depend on the energy of the luminescence signal and the nature of the material forming the sensing layer 8. For example, the period of the linear, rectangular pattern 14 can be calculated using the relation indicated in Table 1;

$$\frac{\hbar \cdot c}{E \cdot n''_8}$$

Of course, other different types of grating patterns could be successfully used, such as sinusoidal grating patterns, jigsaw patterns or two dimensional gratings.

More specifically, the sensing layer 8 comprises a sensing outer surface 12 for coupling with the substance to be characterized. The sensing outer surface 12 is geometrically functionalized to induce surface plasmons resonance in response to the luminescence signal from the photo-emitting substrate layer 4 and to extract the surface bounded modes of resonance of the surface plasmons at the interface between the sensing layer 8 and, for example, the PMMA spin-coated layer 10 or other substance to characterize. A first method to produce this coupling is through a grating pattern such as 14. In addition, a discriminating layer (not shown) can be applied to the sensing surface 12 so as to facilitate and/or enhance a selective coupling with the substance to be characterized. The discriminating layer may comprise, for example, self-assembled monolayers (SAMs) of thiols so as to bio-functionalize the sensing surface 12. A possible approach could involve, according to the art already known, a thiol-(strept)avidin-biotinylated antybody (or DNA) probe architecture for immobilization of specific viral pathogens.

In view of the above, the sensing device 2 according to the non-restrictive illustrative embodiment of the present invention can be used advantageously, but not exclusively, as a biosensing device.

Operation of the sensing device 2 will now be further described.

As mentioned hereinabove, the photo-emitting substrate layer 4 is used to generate a luminescence signal which, in turn, generates surface plasmons at the interface between the sensing layer 8 and, for example, the PMMA spin-coated layer 10. When a substance is coupled to the sensing outer surface 12 in the place of the PMMA spin-coated layer 10, the surface-bounded modes of resonance of the surface plasmons are characteristically modified. In this manner, it is possible to characterize the substance.

The pattern for geometrically functionalizing the sensing outer surface 12 is chosen so as to force an energy transfer from free-light (luminescence signal) emitted from the photo-emitting substrate layer 4 to the surface bounded modes of resonance of the surface plasmons on the sensing outer surface 12, i.e. at the interface between the sensing layer 8 and, for example, the PMMA spin-coated layer 10 or other substance to characterize. The energy transfer being reversible, surface bounded modes of resonance of the surface plasmons at the interface can also be extracted through the grating pattern 14.

As mentioned hereinabove, the PMMA spin-coated layer 10 of the sensor 2 simulates the optical properties of a biological substance. In use, the PMMA spin-coated layer 10 is replaced by a substance to be characterized; the substance could include air and typically, but not exclusively, a biological substance. For the purpose of simulation, the PMMA spin-coated layer 10 can be replaced by a substance having a positive dielectric constant, including biomolecules.

In the non-restrictive illustrative embodiment of the sensing device 2, the index of refraction of the dielectric adaptive layer 6 can be lower than the index of refraction of the photo-emitting substrate layer 4. Under these conditions, the dielectric adaptive layer 6 increases the propagation length of the surface plasmons so that the latter can interact with the grating pattern 14 over a longer distance, resulting in an enhanced extraction of the surface bounded modes of resonance of the surface plasmons at the interface between the sensing layer 8 and, for example, the PMMA spin-coated layer 10 or other substance to characterize. A shorter wavevector enables use of the first order diffraction of the grating pattern 14, which also increases the efficiency of extraction or the surface-bonded modes of resonance of the surface plasmons. The penetration depth of the surface plasmons inside layer 10 and/or layer 6 is also inversely proportional to the wavevector and thus proportional to the propagation length. In other words, a shorter wavevector generally means more interaction with the substance to be characterized and a better signal.

The sensing device 2 has a sensing outer surface 12 open to the environment. Unlike photoluminescence enhancement from LED experiments (Barnes 2004; Okamoto et al. 2004), the surface plasmon sensitive regions are typically not coated with a thick layer of material, such as a metal, thereby resulting in a useful surface plasmon based biosensor.

The sensing outer surface 12, open to the environment, of the sensing device 2 according to the non-restrictive illustrative embodiment of Figure 1 comprises a gold sensing layer 8, since the latter can provide a substantially strong coupling for many substances such as, for example, for SAMs of thiols and, consequently, for protein-based architecture of biosensing. When properly patterned, the sensing outer surface 12 of the gold sensing layer 8 becomes a biosensitive region that facilitates the coupling between a luminescence signal from the photo-emitting substrate layer 4 and the surface plasmons.

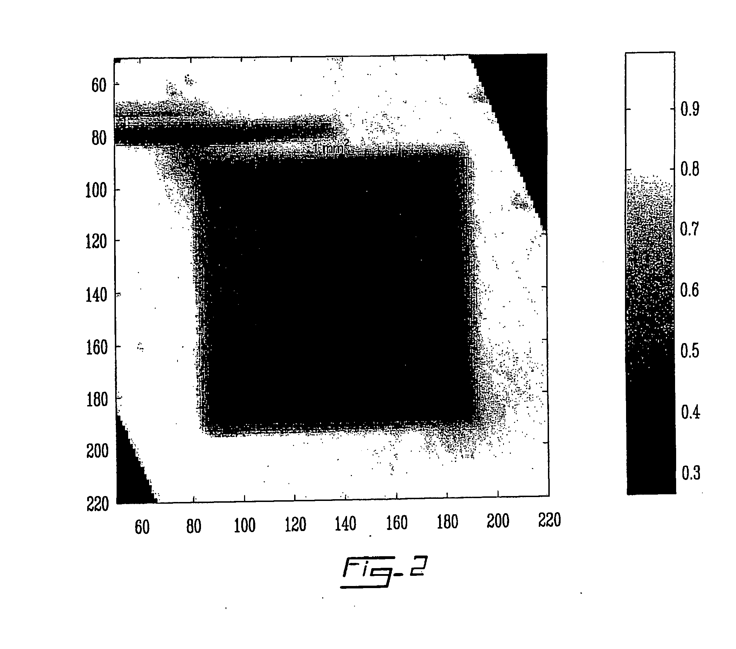

Variations in the surface-bounded modes of resonance of the surface plasmons are correlated to the substance coupled to the sensing outer surface 12 compared to the surface-bounded modes of resonance of the surface plasmons outside the grated region of surface 12 (as shown in Figure 2), i.e. the self-referencing system. An advantage is that this correlation is independent of the excitation means or method to produce the luminescence signal in the photo-emitting substrate layer 4.

In one implementation in which the photo-emitting substrate layer 4 is made of a GaAs-AlGaAs heterostructure emitting at 823 nm, an interesting configuration comprises a dielectric adaptive layer 6 made of a 350 nm thick layer of $SiO_2$ and a sensing layer 8 made of a 10 nm thick layer of gold with a grating pattern 14 having a 375 nm period 18 and a height $\Delta$ of the grooves 16 of 24 nm (Figure 1). The propagation length of the surface plasmons has been estimated at about 4 $\mu$m, which compares to about 80 nm for a similar microstructure without the $SiO_2$ adaptive layer.

In the same implementation, the quantum well photoluminescence signal has been excited with a 473 nm laser applied to the photo-emitting substrate layer 4. Data have been collected from the grating region for different collecting angles. A typical photoluminescence map collected for a fixed angle from the sample with the grating covering an area of 1 mm x 1 mm is shown in Figure 2.

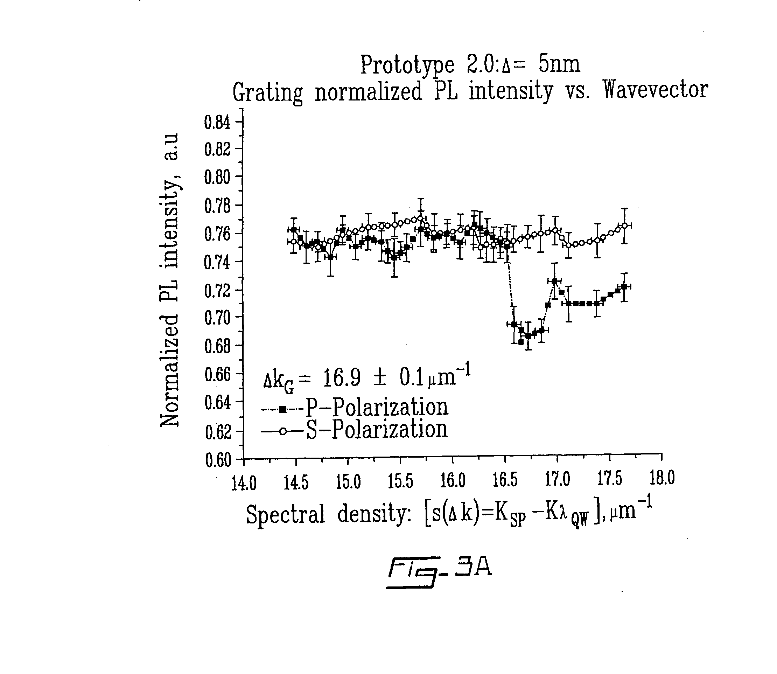

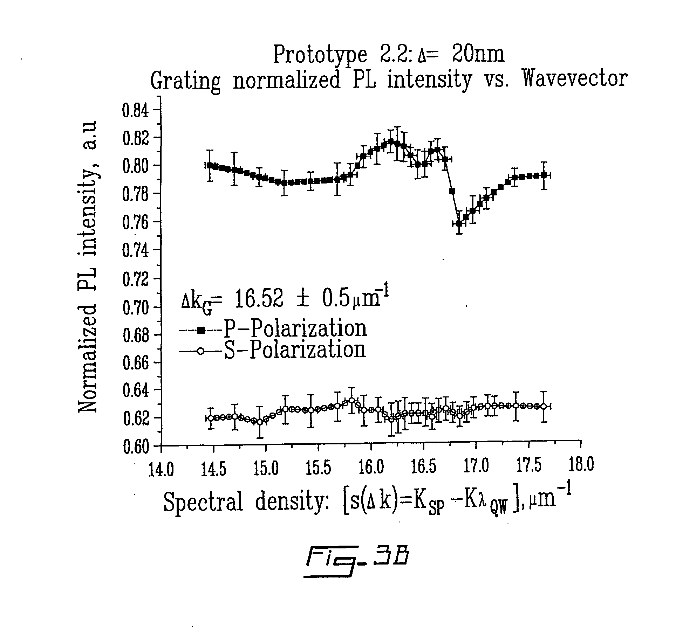

Figures 3a and 3b demonstrate the dependence of the quantum well photoluminescence signal on the collecting angle for a period 18 of the grating pattern 14 of 375 nm and grooves 16 (Figure 1) having a height $\Delta$ of 5 nm (Figure 3a) and 20 nm (Figure 3b). It can be seen that for S-polarized light no change in the intensity could be observed. Also, for the same S-polarization, the measured signal is weaker for the taller grating structure (Figure 3b). This reflects the fact that as the height $\Delta$ is raised the grating region becomes a more efficient wire-grid polarizer, which absorbs more efficiently the S-polarized field crossing the interface. Global dips that have been observed for P-polarized light at $\Delta k_G$ (a wavevector corresponding to the grated surface) near 16.9 and 16.5 $\mu m^{-1}$ (Figures 3a and 3b, respectively) correspond to the region of the grating wavevector where efficient absorption of the quantum well photoluminescence by surface plasmons can take place. The relative photoluminescence intensity at $\Delta k_G$=16.9 $\mu m^{-1}$ in Fig. 3a is locally maximized, indicating some extraction of the surface-bounded modes of resonance of the surface plasmons. This effect is more evident in Figure 3b, where the signal at $\Delta k_G$=16.52 $\mu m^{-1}$ coincides with the overall maximum of the extracted signal and where the dielectric adaptive layer is a 350 nm thick layer of $SiO_2$ deposited on one surface of semiconductor (photo-emitting substrate layer 4). This is followed by a 10 nm thick film of gold (sensing layer 8), on which a 375 nm period grating is fabricated with grooves being 24 nm tall. The thickness of the sensing layer 8 will vary with luminescent energy used, depth of penetration of surface plasmons inside layer 8 (5-20 nm) and intensity of the luminescent source.

It is to be understood that the invention is not limited in its application to the details of construction and parts illustrated in the accompanying drawings and described hereinabove. The invention is capable of other embodiments and of being practiced in various ways. It is also to be understood that the phraseology or terminology used herein is for the purpose of description and not limitation. Hence, although the present invention has been described hereinabove by way of illustrative embodiments thereof, it can be modified at will, within the scope of the appended claims.

## **REFERENCES**

Barnes, W. L. (2004), 'Light-emitting devices - Turning the tables on surface plasmons', Nature Materials, 3 (9), 588-89.

Ebbesen, T. W., et al. (1998), 'Extraordinary optical transmission through sub-wavelength hole arrays', Nature, 391 (6668), 667-69.

Gontijo, I., et al. (1999), 'Coupling of InGaN quantum-well photoluminescence to silver surface plasmons', Physical Review B, 60 (16), 11564-67.

Hecker, N. E., Hopfel, R. A., and Sawaki, N. (1998), 'Enhanced light emission from a single quantum well located near a metal coated surface', Physica E, 2 (1-4), 98-101.

Hecker, N. E., et al. (1999), 'Surface plasmon-enhanced photoluminescence from a single quantum well', Applied Physics Letters, 75 (11), 1577-79.

Neogi, A. and Morkoc, H. (2004), 'Resonant surface plasmon-induced modification of photoluminescence from GaN/AlN quantum dots', Nanotechnology, 15 (9), 1252-55.

Neogi, A., et al. (2002), 'Enhancement of spontaneous recombination rate in a quantum well by resonant surface plasmon coupling', Physical Review B, 66 (15), -.

Okamoto, K., et al. (2004), 'Surface-plasmon-enhanced light emitters based on InGaN quantum wells', Nature Materials, 3 (9), 601-05.

Porto, J. A., Garcia-Vidal, F. J., and Pendry, J. B. (1999), 'Transmission resonances on metallic gratings with very narrow slits', Physical Review Letters, 83 (14), 2845-48.

Stuart, H. R. and Hall, D. G. (1996), 'Absorption enhancement in silicon-on-insulator waveguides using metal island films', Applied Physics Letters, 69 (16), 2327-29.

Takeda, E., et al. (2006), 'Surface plasmon polariton mediated photoluminescence from excitons in silicon nanocrystals', Applied Physics Letters, 89 (10), -.

Vuckovic, J., Loncar, M., and Scherer, A. (2000), 'Surface plasmon enhanced light-emitting diode', IEEE Journal of Quantum Electronics, 36 (10), 1131-44.

## **Claims**

1. A sensing device (2) for characterizing a substance by modifying modes of resonance of surface plasmons, the sensing device comprising a photo-emitting substrate layer (4) for emitting a luminescence signal; a dielectric adaptive layer (6) provided on the photo-emitting substrate layer; and a sensing layer (8) provided on the dielectric adaptive layer, the sensing layer having a sensing surface (12), opposite to the dielectric adaptive layer, for coupling with the substance to be characterized; wherein

- the sensing surface comprises a geometric pattern (14) to induce surface plasmons resonance in response to the luminescence signal from the photo-emitting substrate layer and to extract surface bounded modes of resonance of the surface plasmons at an interface between the sensing layer and the substance to be characterized;

- the dielectric adaptive layer is interposed between the photo-emitting substrate layer and the sensing layer to increase a propagation length of the surface plasmons at the sensing surface and defines a Fabry-Perot etalon to improve a signal to noise ratio of a light signal emitted from the sensing device; and

- the substance to be characterized, when coupled to the sensing surface, characteristically modifies the surface-bounded modes of resonance of the surface plasmons.

2. The sensing device as recited in claim 1, further comprising an external laser for exciting the photo-emitting substrate layer in order to emit the luminescence signal.

3. The sensing device as recited in claim 1, wherein the photo-emitting substrate layer emits the luminescence signal through electrical biasing.

4. The sensing device as recited in claim 1, wherein the photo-emitting substrate layer includes a GaAs-AlGaAs heterostructure.

5. The sensing device as recited in claim 1, wherein the dielectric adaptive layer includes $SiO_2$.

6. The sensing device as recited in claim 1, wherein the dielectric layer has an index of refraction lower than an index of refraction of the photo-emitting substrate layer.

7. The sensing device as recited in claim 1, wherein the geometric pattern is a grating pattern.

8. The sensing device as recited in claim 1, wherein the sensing layer includes a metal.

9. The sensing device as recited in claim 8, wherein the metal includes gold.

10. The sensing device as recited in claim 1, further comprising a discriminating layer applied onto the sensing surface of the sensing layer for selectively coupling with the substance to be characterized.

11. The sensing device recited in claim 10, wherein the discriminating layer comprises self-assembled monolayers of thiols.

12. A sensing method for characterizing a substance by modifying modes of resonance of surface plasmons, the sensing method comprising:

   providing a sensing device (2) according to any of the preceding claims;
   emitting a luminescence signal from the photo-emitting substrate layer (4) of the sensing device;
   inducing surface plasmons resonance in response to the luminescence signal from the photo-emitting substrate layer and extracting surface bounded modes of resonance of the surface plasmons at an interface between the sensing layer (8) and the substance to be characterized;
   coupling the substance to be characterized to the sensing surface (12) of the sensing layer to characteristically modify the surface bounded modes of resonance of the surface plasmons; and
   characterizing the substance based on the characteristically modified surface bounded modes of resonance.

13. The sensing method as recited in claim 12, comprising applying an external laser to the photo-emitting substrate layer for exciting the photo-emitting substrate layer and emitting the luminescence signal.

14. The sensing method as recited in claim 12, comprising electrically biasing the photo-emitting substrate layer for emitting the luminescence signal.

15. The sensing method as recited in claim 12, wherein the photo-emitting substrate layer has a GaAs-AlGaAs heterostructure.

16. The sensing method as recited in claim 12, wherein the dielectric adaptive layer includes $SiO_2$.

**17.** The sensing method as recited in claim 12, wherein the geometric pattern is a grating pattern.

**18.** The sensing method as recited in claim 12, wherein the sensing layer includes gold.

**19.** The sensing method as recited in claim 12, wherein a discriminating layer is provided on the sensing surface of the sensing layer for selectively coupling with the substance to be characterized.

**20.** The sensing method as recited in claim 19, wherein the discriminating layer includes self-assembled monolayers of thiols.

**Patentansprüche**

**1.** Erfassungsvorrichtung (2) zum Charakterisieren einer Substanz durch Modifizieren der Oberflächenplasmon-Resonanzmodi, wobei die Erfassungsvorrichtung eine lichtemittierende Substratschicht (4) zum Emittieren eines Lumineszenzsiqnals; eine dielektrische adaptive Schicht (6), die auf der lichtemittierenden Substratschicht bereitgestellt ist; und eine Erfassungsschicht (6) umfasst, die auf der dielektrischen adaptiven Schicht bereitgestellt ist, wobei die Erfassungsschicht eine Erfassungsfläche (12), gegenüber der dielektrischen adaptiven Schicht, zum Koppeln mit der zu charakterisierenden Substanz aufweist; wobei

- die Erfassungsfläche ein geometrisches Muster (14) zum Einleiten der Oberflächenplasmon-Resonanz als Reaktion auf ein Lumineszenzsignal aus der lichtemittierenden Substratschicht umfasst, und zur Extraktion von oberflächengebundenen Oberflächenplasmon-Resonanzmodi an der Grenzfläche zwischen der Erfassungsschicht und der zu charakterisierenden Substanz; und
- die dielektrische adaptive Schicht zwischen der lichtemittierenden Substratschicht und der Erfassungsschicht angeordnet ist, um die Propagationslänge der Oberflächenplasmonen an der Erfassungsfläche zu erhöhen und ein Fabry-Perot-Etalon zu definieren, um ein Signal-RauschVerhältnis eines aus der Erfassungsvorrichtung emittierten Lichtsignals zu verbessern; und
- die zu charakterisierende Substanz beim Koppeln an die Erfassungsfläche die oberflächengebundenen Oberflächenplasmon-Resonanzmodi auf charakteristische Weise modifiziert.

**2.** Erfassungsvorrichtung nach Anspruch 1, ferner umfassend einen externen Laser zum Anregen der lichtemittierenden Substratschicht, um das Lumineszenzsignal zu emittieren.

**3.** Erfassungsvorrichtung nach Anspruch 1, wobei die lichtemittierende Substratschicht das Lumineszenzsignal durch elektrische Vorspannung emittiert.

**4.** Erfassungsvorrichtung nach Anspruch 1, wobei die lichtemittierende Substratschicht eine GaAs-AlGaAs-Heterostruktur aufweist.

**5.** Erfassungsvorrichtung nach Anspruch 1, wobei die dielektrische adaptive Schicht $SiO_2$ enthält.

**6.** Erfassungsvorrichtung nach Anspruch 1, wobei die dielektrische Schicht einen Brechungsindex von weniger als einen Brechungsindex der lichtemittierenden Substratschicht aufweist.

**7.** Erfassungsvorrichtung nach Anspruch 1, wobei das geometrische Muster ein Gittermuster ist.

**8.** Erfassungsvorrichtung nach Anspruch 1, wobei die Erfassungsschicht ein Metall enthält.

**9.** Erfassungsvorrichtung nach Anspruch 8, wobei das Metall Gold enthält.

**10.** Erfassungsvorrichtung nach Anspruch 1, ferner umfassend eine Unterscheidungsschicht, die auf die Erfassungsfläche der Erfassungsschicht aufgebracht wird, um sich selektiv an die zu charakterisierende Substanz zu koppeln.

**11.** Erfassungsvorrichtung nach Anspruch 10, wobei die Unterscheidungsschicht selbstorganisierende Monoschichten von Thiolen umfasst.

**12.** Erfassungsverfahren zum Charakterisieren einer Substanz durch Modifizieren der Oberflächenplasmon-Resonanzmodi, wobei das Erfassungsverfahren Folgendes umfasst:

Bereitstellen einer Erfassungsvorrichtung (2) nach einem der vorhergehenden Ansprüche;
Emittieren eines Lumineszenzsignals aus der lichtemittierenden Substratschicht (4) der Erfassungsvorrichtung;
Einleiten der Oberflächenplasmon-Resonanz als Reaktion auf ein Lumineszenzsignal von der lichtemittierenden Substratschicht und Extrahieren oberflächengebundener Oberflächenplasmon-Resonanzmodi an einer Grenzfläche zwischen der Erfassungsschicht (8) und der zu charakterisierenden Substanz;
Koppeln der zu charakterisierenden Substanz an die Erfassungsfläche (12) der Erfassungsschicht zum charakteristischen Modifizieren der oberflächengebundenen Oberflächenplasmon-Resonanzmodi; und
Charakterisieren der Substanz basierend auf der charakteristisch modifizierten oberflächengebundenen Resonanzmodi.

13. Erfassungsverfahren nach Anspruch 12, umfassend das Aufbringen eines externen Lasers auf die lichtemittierende Substratschicht, um die lichtemittierende Substratschicht anzuregen und das Lumineszenzsignal zu emittieren.

14. Erfassungsverfahren nach Anspruch 12, umfassend die elektrische Vorspannung der lichtemittierenden Substratschicht zum Emittieren des Lumineszenzsignals.

15. Erfassungsverfahren nach Anspruch 12, wobei die lichtemittierende Substratschicht eine GaAs-AlGaAs-Heterostruktur aufweist.

16. Erfassungsverfahren nach Anspruch 12, wobei die dielektrische adaptive Schicht $SiO_2$ enthält.

17. Erfassungsverfahren nach Anspruch 12, wobei das geometrische Muster ein Gittermuster ist.

18. Erfassungsverfahren nach Anspruch 12, wobei die Erfassungsschicht Gold aufweist.

19. Erfassungsverfahren nach Anspruch 12, wobei eine Unterscheidungsschicht auf der Erfassungsfläche der Erfassungsschicht bereitgestellt ist, um sich selektiv an die zu charakterisierende Substanz zu koppeln.

20. Erfassungsverfahren nach Anspruch 19, wobei die Unterscheidungsschicht selbstorganisierende Monoschichten von Thiolen aufweist.

## Revendications

1. Dispositif de détection (2) destiné à caractériser une substance en modifiant des modes de résonance de plasmons de surface, le dispositif de détection comprenant une couche de substrat photo-émettrice (4) destinée à émettre un signal de luminescence ; une couche adaptative diélectrique (6) agencée sur la couche de substrat photo-émettrice ; et une couche de détection (8) agencée sur la couche adaptative diélectrique, la couche de détection présentant une surface de détection (12), opposée à la couche adaptative diélectrique, afin d'assurer le couplage avec la substance à caractériser ; dans lequel
la surface de détection comprend un motif géométrique (14) destiné à induire la résonance de plasmons de surface en réponse au signal de luminescence provenant de la couche de substrat photo-émettrice et à extraire des modes de résonance liés à la surface des plasmons de surfaces au niveau de l'interface entre la couche de détection et la substance à caractériser ;
la couche adaptative diélectrique est interposée entre la couche de substrat photo-émettrice et la couche de détection afin d'augmenter une longueur de propagation des plasmons de surface au niveau de la surface de détection et définit un étalon de Fabry-Perot de manière à améliorer un rapport signal sur bruit d'un signal lumineux émis à partir du dispositif de détection ; et
la substance à caractériser, lorsqu'elle est couplée à la surface de détection, modifie de manière caractéristique les modes de résonance des plasmons de surface.

2. Dispositif de détection selon la revendication 1, comprenant, en outre, un laser externe destiné à exciter la couche de substrat photo-émettrice dans le but d'émettre le signal de luminescence.

3. Dispositif de détection selon la revendication 1, dans lequel la couche de substrat photo-émettrice émet le signal de luminescence par l'intermédiaire d'une polarisation électrique.

**4.** Dispositif de détection selon la revendication 1, dans lequel la couche de substrat photo-émettrice comporte une hétérostructure en GaAs-AlGaAs.

**5.** Dispositif de détection selon la revendication 1, dans lequel la couche adaptative diélectrique comporte du $SiO_2$.

**6.** Dispositif de détection selon la revendication 1, dans lequel la couche diélectrique présente un indice de réfraction inférieur à un indice de réfraction de la couche de substrat photo-émettrice.

**7.** Dispositif de détection selon la revendication 1, dans lequel le motif géométrique est un motif en grille.

**8.** Dispositif de détection selon la revendication 1, dans lequel la couche de détection comporte un métal.

**9.** Dispositif de détection selon la revendication 8, dans lequel le métal comporte de l'or.

**10.** Dispositif de détection selon la revendication 1, comprenant, en outre, une couche de discrimination appliquée sur la surface de détection de la couche de détection afin d'assurer un couplage sélectif avec la substance à caractériser.

**11.** Dispositif de détection selon la revendication 10, dans lequel la couche de discrimination comprend des monocouches auto-assemblées de thiols.

**12.** Procédé de détection destiné à caractériser une substance par modification de modes de résonance de plasmons de surface, le procédé comprenant :

la préparation d'un dispositif de détection (2) selon l'une quelconque des revendications précédentes ;
l'émission d'un signal de luminescence à partir de la couche de substrat photo-émettrice (4) du dispositif de détection ;
l'induction d'une résonance de plasmons de surface en réponse au signal de luminescence provenant la couche de substrat photo-émettrice et l'extraction de modes de résonance liés à la surface des plasmons de surface au niveau d'une interface entre la couche de détection (8) et le substrat à caractériser ;
le couplage de la substance à caractériser avec la surface de détection (12) de la couche de détection afin de modifier de manière caractéristique les modes de résonance liés à la surface des plasmons de surface ; et
la caractérisation de la substance sur la base des modes de résonance liés à la surface modifiés de manière caractéristique.

**13.** Procédé de détection selon la revendication 12, comprenant l'application d'un laser externe sur la couche de substrat photo-émettrice afin d'exciter la couche de substrat photo-émettrice et d'émettre le signal de luminescence.

**14.** Procédé de détection selon la revendication 12, comprenant la polarisation électrique de la couche de substrat photo-émettrice afin d'émettre le signal de luminescence.

**15.** Procédé de détection selon la revendication 12, dans lequel la couche de substrat photo-émettrice comporte une hétérostructure en GaAs-AlGaAs.

**16.** Procédé de détection selon la revendication 12, dans lequel la couche adaptative diélectrique comporte du $SiO_2$.

**17.** Procédé de détection selon la revendication 12, dans lequel le motif géométrique est un motif en grille.

**18.** Procédé de détection selon la revendication 12, dans lequel la couche de détection comporte de l'or.

**19.** Procédé de détection selon la revendication 12, dans lequel la couche de discrimination est agencée sur la surface de détection de la couche de détection d'assurer un couplage sélectif avec la substance à caractériser.

**20.** Procédé de détection selon la revendication 19, dans lequel la couche de discrimination comporte des monocouches auto-assemblées de thiols.

EP 1 956 364 B1

Z

$\mathcal{E}4$

18

P

X

2

$\mathcal{E}3$ 10

14 12

16

b

$\mathcal{E}2$ 8

$\Delta$

d

$\mathcal{E}1$ 6

a

Substrate $\mathcal{E}0$ 4

*Fig-1*

Fig-2

Prototype 2.0:Δ= 5nm
Grating normalized PL intensity vs. Wavevector

$\Delta k_G = 16.9 \pm 0.1 \mu m^{-1}$

---■--- P–Polarization
—○— S–Polarization

Normalized PL intensity, a.u

Spectral density: $[s(\Delta k) = K_{SP} - K\lambda_{QW}], \mu m^{-1}$

*Fig- 3A*

EP 1 956 364 B1

Prototype 2.2: Δ= 20nm
Grating normalized PL intensity vs. Wavevector

$\Delta k_G = 16.52 \pm 0.5 \mu m^{-1}$

—■—P-Polarization
—o—S-Polarization

Normalized PL intensity, a.u

Spectral density: $[s(\Delta k) = K_{SP} - K\lambda_{QW}], \mu m^{-1}$

*Fig-3B*

EP 1 956 364 B1

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BARNES, W. L.** Light-emitting devices - Turning the tables on surface plasmons. *Nature Materials,* 2004, vol. 3 (9), 588-89
- **EBBESEN, T. W. et al.** Extraordinary optical transmission through sub-wavelength hole arrays. *Nature,* 1998, vol. 391 (6668), 667-69
- **GONTIJO, I. et al.** Coupling of InGaN quantum-well photoluminescence to silver surface plasmons. *Physical Review B,* 1999, vol. 60 (16), 11564-67
- **HECKER, N. E. ; HOPFEL, R. A. ; SAWAKI, N.** Enhanced light emission from a single quantum well located near a metal coated surface. *Physica E,* 1998, vol. 2 (1-4), 98-101
- **HECKER, N. E. et al.** Surface plasmon-enhanced photoluminescence from a single quantum well. *Applied Physics Letters,* 1999, vol. 75 (11), 1577-79
- **NEOGI, A. ; MORKOC, H.** Resonant surface plasmon-induced modification of photoluminescence from GaN/AlN quantum dots. *Nanotechnology,* 2004, vol. 15 (9), 1252-55
- **NEOGI, A. et al.** Enhancement of spontaneous recombination rate in a quantum well by resonant surface plasmon coupling. *Physical Review B,* 2002, vol. 66 (15
- **OKAMOTO, K. et al.** Surface-plasmon-enhanced light emitters based on InGaN quantum wells. *Nature Materials,* 2004, vol. 3 (9), 601-05
- **PORTO, J. A. ; GARCIA-VIDAL, F. J. ; PENDRY, J. B.** Transmission resonances on metallic gratings with very narrow slits. *Physical Review Letters,* 1999, vol. 83 (14), 2845-48
- **STUART, H. R. ; HALL, D. G.** Absorption enhancement in silicon-on-insulator waveguides using metal island films. *Applied Physics Letters,* 1996, vol. 69 (16), 2327-29
- **TAKEDA, E. et al.** Surface plasmon polariton mediated photoluminescence from excitons in silicon nanocrystals. *Applied Physics Letters,* 2006, vol. 89 (10
- **VUCKOVIC, J. ; LONCAR, M. ; SCHERER, A.** Surface plasmon enhanced light-emitting diode. *IEEE Journal of Quantum Electronics,* 2000, vol. 36 (10), 1131-44